# EUROPEAN PATENT APPLICATION

(11) **EP 2 768 255 A1**
(43) Date of publication of application: **20.08.2014**
(21) Application number: 11873921.8
(22) Date of filing: 13.10.2011
(51) Int. Cl.: H04W 28/06, H04W 72/04

(54) **WIRELESS COMMUNICATION SYSTEM, BASE STATION, MOBILE STATION, AND WIRELESS COMMUNICATION METHOD**

(71) Applicant: Fujitsu Limited, Kawasaki-shi, Kanagawa 211-8588 (JP)
(72) Inventor: SUDA, Kenji, Kawasaki-shi Kanagawa 211-8588 (JP)
(74) Representative: Reichl, Philipp
(86) International application number: PCT/JP2011/073581
(87) International publication number: WO 2013/054424

(57) **Abstract**

The wireless communication system includes a base station (10) and a mobile station that communicates with the base station (10). The base station (10) includes a sending unit (17). The sending unit (17) sends, to the mobile station, a first signal that indicates, as a notification, reduction of the number of candidates for channels each of which includes control information addressed to the mobile station. The mobile station includes a receiving unit and a number-of-candidates reducing unit. The receiving unit receives the first signal sent by the sending unit (17). The number-of-candidates reducing unit monitors one or a plurality of channels the number of which has been reduced, from the candidates, based on the first signal and acquires the control information from the one or the plurality of channels.

## Description

### [Technical Field]

The embodiments discussed herein are directed to a wireless communication system, a base station, a mobile station, and a wireless communication method.

### [Background Art]

In a wireless communication system that uses a wireless communication method, such as Long Term Evolution (LTE), base stations sends control information to mobile stations, whereby the stations perform scheduling for transmission of data in mobile station. The control information includes Down Link (DL) scheduling information or an Up Link (UL) grant and is sent and received via a physical downlink control channel (PDCCH). Because the mobile stations do not recognize the arrangement of the PDCCH or the encode rate (Aggregation Level: AL) of each PDCCH before the control information is received, each of the mobile stations detects, from among a plurality of PDCCH candidates, a PDCCH that includes the control information that is to be received by the mobile station. This type of operation performed by the mobile stations is referred to as Blind Detection (BD). The mobile stations detect, in BD, for example, from among 22 candidates in each of the uplink direction and the downlink direction (a total of 44 candidates), a PDCCH that is used to receive the control information.

### [Citation List]

### [Patent Citation]

Patent Document 1: International Publication Pamphlet No. WO 2009/001594

### [Summary of Invention]

### [Technical Problem]

However, the number of PDCCHs targeted for the BD increases in accordance with an additional new function of the wireless communication system. For example, with LTE in Release 8, the number of PDCCH candidates is 44. However, with LTE in Release 10, due to an increase in functions, such as an uplink coordinated multipoint (ULCoMP) function available for a plurality of cells, transmission modes may possibly be increased. In such a case, because a downlink control information (DCl) format for a PDCCH is newly added, the number of PDCCHs targeted by the BD performed by a mobile station increases by at least 16. Consequently, the number of PDCCH candidates increases and an amount of process also increases that is performed when a mobile station specifies, from among the PDCCH candidates, a PDCCH that includes control information that is addressed to the mobile station. Thus, electrical power consumed by the mobile station or a delay in the process is increased.

The present invention has been conceived in light of the circumstances described above, and an object thereof is to provide a wireless communication system, a base station, a mobile station, and a wireless communication method that can reduce the amount of process performed by a mobile station.

### [Solution to Problem]

To solve the above problem and attain the object, a wireless communication system disclosed in this application, according to an aspect, includes a base station and a mobile station that communicates with the base station. The base station includes a sending unit. The sending unit sends, to the mobile station, a first signal that indicates, as a notification, reduction of the number of candidates for channels each of which includes control information addressed to the mobile station. The mobile station includes a receiving unit and an acquiring unit. The receiving unit receives the first signal sent by the sending unit. The acquiring unit monitors one or a plurality of channels the number of which has been reduced, from the candidates, based on the first signal and acquires the control information from the one or the plurality of channels.

### [Advantageous Effects of Invention]

According to an aspect of an embodiment of the wireless communication system disclosed in the present invention, an advantage is provided in that a mobile station can reduce the amount of process performed by the mobile station.

### [Brief Description of Drawings]

FIG. 1 is a schematic diagram illustrating the functional configuration of a wireless communication system.
FIG. 2 is a schematic diagram illustrating the functional configuration of a base station according to a first embodiment.
FIG. 3 is a schematic diagram illustrating the functional configuration of a mobile station according to the first embodiment.
FIG. 4 is a schematic diagram illustrating the hardware configuration of the base station.
FIG. 5 is a schematic diagram illustrating the hardware configuration of the mobile station.
FIG. 6 is a sequence diagram illustrating the operation of the wireless communication system according to the first embodiment.
FIG. 7A is a schematic diagram illustrating an example of the initial format of the number of PDCCH candidates.
FIG. 7B is a schematic diagram illustrating an example of the special format of the number of PDCCH candidates according to the first embodiment.
FIG. 8 is a flowchart illustrating the flow of the process performed by the base station according to the first embodiment.
FIG. 9 is a flowchart illustrating the flow of the process performed by the mobile station according to the first embodiment.
FIG. 10 is a schematic diagram illustrating an example of the special format of the number of PDCCH candidates according to modification 1 of the first embodiment.
FIG. 11 is a sequence diagram illustrating the operation of a wireless communication system according to modification 2 of the first embodiment.
FIG. 12 is a schematic diagram illustrating the functional configuration of a base station according to a second embodiment.
FIG. 13 is a schematic diagram illustrating the functional configuration of a mobile station according to the second embodiment.
FIG. 14 is a sequence diagram illustrating the operation of a wireless communication system according to the second embodiment.
FIG. 15 is a schematic diagram illustrating the functional configuration of a base station according to a third embodiment.
FIG. 16 is a sequence diagram illustrating the operation of a wireless communication system according to the third embodiment.
FIG. 17 is a schematic diagram illustrating the functional configuration of a base station according to modification 1 of the third embodiment.
FIG. 18 is a sequence diagram illustrating the operation of a wireless communication system according to modification 1 of the third embodiment.
FIG. 19 is a schematic diagram illustrating the functional configuration of a base station according to modification 2 of the third embodiment.
FIG. 20 is a sequence diagram illustrating the operation of a wireless communication system according to modification 2 of the third embodiment.

### [Embodiments for Carrying Out the Invention]

Preferred embodiments of a wireless communication system, a base station, a mobile station, and a wireless communication method disclosed in the present invention will be described in detail below with reference to the accompanying drawings. The wireless communication system, the base station, the mobile station, and the wireless communication method disclosed in the present invention is not limited to the embodiments described below.

### [a] First Embodiment

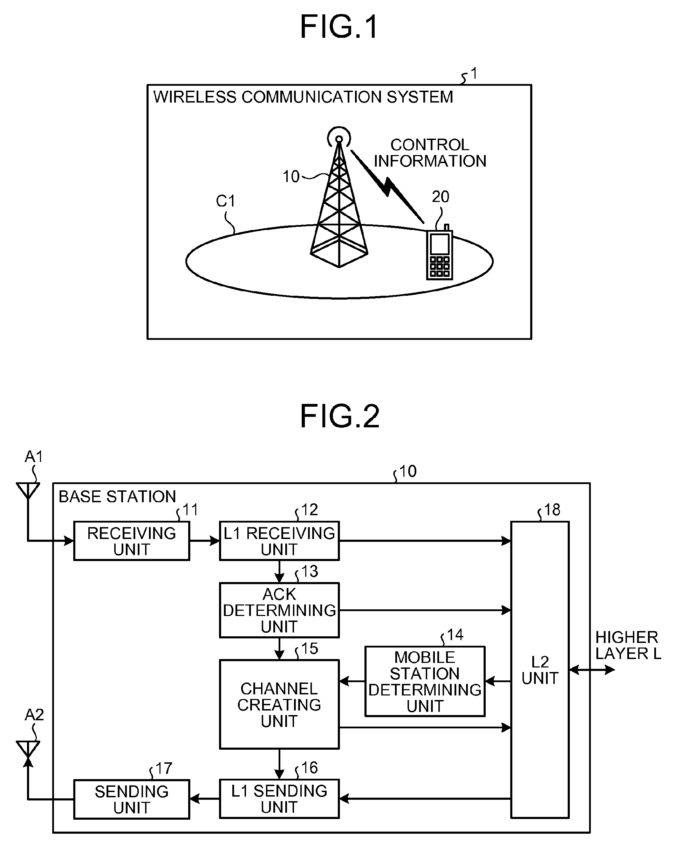

In the following, a description will be given of the configuration of a wireless communication system according to a first embodiment. FIG. 1 is a schematic diagram illustrating the functional configuration of a wireless communication system 1. As illustrated in FIG. 1, the wireless communication system 1 is a system in which LTE is used as a wireless communication method. The wireless communication system 1 includes a base station 10 and a mobile station 20, which will be described later. The base station 10 forms a cell C1 and sends and receives various signals or data to and from the mobile station 20 located in the cell C1. In particular, by sending control information to the mobile station 20, the base station 10 performs the scheduling of sending and receiving data in the mobile station 20. This control information includes DL scheduling information or a UL grant and is sent and received via a PDCCH. The mobile station 20 is, for example, a mobile phone located in the cell C1 and can perform wireless communication with the base station 10. The mobile station 20 receives the control information from the base station 10 and receives, based on the received control information, data that is sent from the base station 10 to the mobile station 20.

FIG. 2 is a schematic diagram illustrating the functional configuration of the base station 10 according to a first embodiment. As illustrated in FIG. 2, the base station 10 includes the functions of a receiving unit 11, an L1 receiving unit 12, an acknowledgement (ACK) determining unit 13, a mobile station determining unit 14, a channel creating unit 15, an L1 sending unit 16, a sending unit 17, and an L2 unit 18. Each of these units is connected such that a signal or data can be input and output in a one-way or two-way direction.

The receiving unit 11 includes an antenna A1 and receives an ACK that is sent back from the mobile station 20 as a response to a number-of-candidates reduction notification signal, which will be described later. The L1 receiving unit 12 receives a signal, which is sent from the mobile station 20, via a PDCCH belonging to the layer 1. The ACK determining unit 13 determines whether a response to the number-of-candidates reduction notification signal sent from the mobile station 20 is an ACK or negative acknowledgment (NACK). The mobile station determining unit 14 determines whether the mobile station that communicates with the base station 10 is a mobile station that is the reduction target for the number of candidates for PDCCH that includes control information addressed to the subject mobile station. When the channel creating unit 15 receives an ACK from the mobile station 20, the channel creating unit 15 reduces the number of candidates for the PDCCH that includes the control information addressed to the mobile station 20 and then allocates the resource to the mobile station 20, whereby the channel creating unit 15 creates the reduced number of PDCCH candidates. The L1 sending unit 16 sends a signal to the mobile station 20 via a PDCCH that belongs to the layer 1. The sending unit 17 includes an antenna A2 and sends the number-of-candidates reduction notification signal described above to the mobile station (for example, the mobile station 20) that is determined to be the reduction target for the number of candidates. By using a protocol belonging to the layer 2, the L2 unit 18 sends and receives various signals via a higher layer L between the base station 10 and other base stations by using a wired connection.

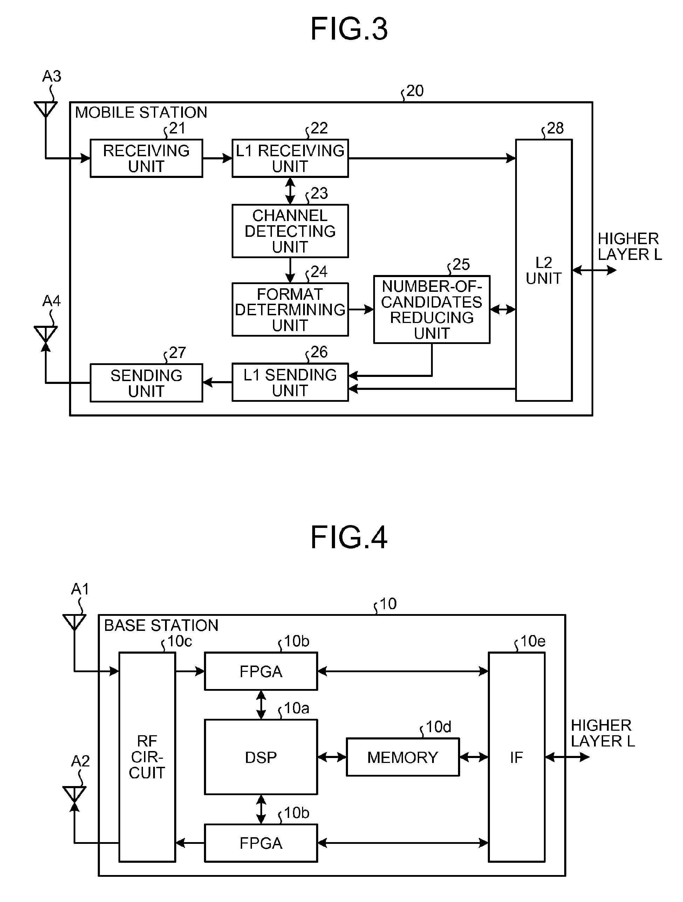

FIG. 3 is a schematic diagram illustrating the functional configuration of the mobile station 20 according to the first embodiment. As illustrated in FIG. 3, the mobile station 20 includes the functions of a receiving unit 21, an L1 receiving unit 22, a channel detecting unit 23, a format determining unit 24, a number-of-candidates reducing unit 25, an L1 sending unit 26, a sending unit 27, and an L2 unit 28. Each of these units is connected such that a signal or data can be input and output in a one-way or two-way direction.

The receiving unit 21 includes an antenna A3 and receives the number-of-candidates reduction notification signal sent from the base station 10. The L1 receiving unit 22 receives, via a PDCCH that belongs to the layer 1, the signal sent from the base station 10. The channel detecting unit 23 detects, from the PDCCH targeted by the monitoring, a PDCCH that is used for the mobile station 20. The format determining unit 24 determines whether the type of the format included in the received number-of-candidates reduction notification signal is an "initial" type or a "special" type. The number-of-candidates reducing unit 25 reduces, in accordance with the number-of-candidates reduction notification signal described above, the number of candidates for the PDCCHs each of which includes the control information addressed to the mobile station 20; monitors one or more PDCCHs of the reduced number of candidates; and acquires the control information addressed to the mobile station 20 from the monitored PDCCHs. The L1 sending unit 26 sends, via a PDCCH belonging to the layer 1, a signal addressed to the base station 10. The sending unit 27 includes an antenna A4 and sends back an ACK or a NACK to the base station 10 as a response to the number-of-candidates reduction notification signal described above. The L2 unit 28 sends and receives various signals via the higher layer L by using a protocol belonging to the layer 2.

FIG. 4 is a schematic diagram illustrating the hardware configuration of the base station 10. As illustrated in FIG. 4, the base station 10 includes, as components of hardware, a digital signal processor (DSP) 10a, a field programmable gate array (FPGA) 10b, a radio frequency (RF) circuit 10c, a memory 10d, and an interface (IF) 10e. The DSP 10a and the FPGA 10b are connected with each other via the IF unit 10e, such as a switch, such that various signals or data can be input or output. The RF circuit 10c includes antenna A1 used for receiving data and the antenna A2 used for transmission. The memory 10d is formed by, for example, a RAM, such as a synchronous dynamic random access memory (SDRAM); a read only memory (ROM); or a flash memory. The receiving unit 11 and the sending unit 17 are implemented by the RF circuit 10c. The L1 receiving unit 12 and the L1 sending unit 16 are implemented by the FPGA 10b. Furthermore, the ACK determining unit 13, the mobile station determining unit 14, and the channel creating unit 15 are implemented by the DSP 10a. The L2 unit 18 is implemented by the DSP 10a and the IF 10e.

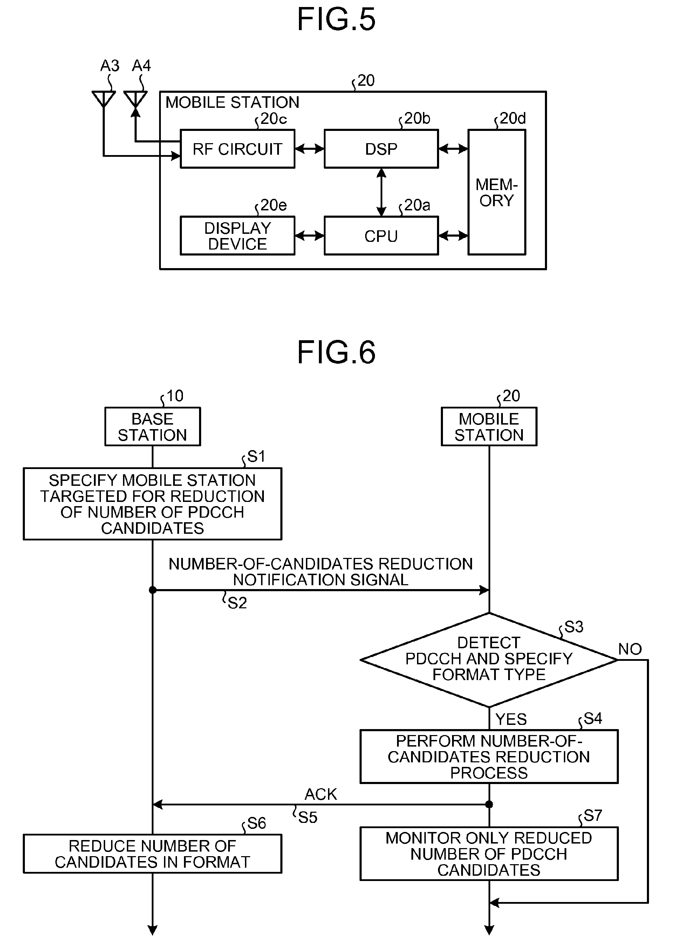

The mobile station 20 described above is physically implemented by, for example, a mobile phone. FIG. 5 is a schematic diagram illustrating the hardware configuration of the mobile station 20. As illustrated in FIG. 5, the mobile station 20 includes, as hardware, a central processing unit (CPU) 20a, a DSP 20b, an RF circuit 20c that includes antennas A3 and A4, a memory 20d, and a display device 20e, such as a liquid crystal display (LCD). The memory 20d is formed by, for example, a RAM, such as an SDRAM, a ROM, or a flash memory. The receiving unit 21 and the sending unit 27 are implemented by the RF circuit 20c. The L1 receiving unit 22, the channel detecting unit 23, the format determining unit 24, the number-of-candidates reducing unit 25, and the L1 sending unit 26 are implemented by the DSP 20b. The L2 unit 28 is implemented by an integrated circuit, such as the CPU 20a or the like.

In the following, the operation of the wireless communication system 1 according to the first embodiment will be described. FIG. 6 is a sequence diagram illustrating the operation of the wireless communication system 1 according to the first embodiment. At Step S1, the DSP 10a specifies a mobile station that is targeted for the reduction of the number of PDCCH candidates. The DSP 10a specifies the target mobile station based on, for example, the setting of the mode of each mobile station or the number of PDCCHs that is targeted by the BD performed by each mobile station. Furthermore, the base station 10 may also specify the target mobile station by referring to the received power value (received radio wave intensity) or the received signal-to-interference plus noise power ratio (SINR). Alternatively, the base station 10 may also set all of the mobile stations connected to the base station 10 as the reduction targets.

Due to the reduction of the number of candidates with respect to the mobile station 20, at Step S2, the number-of-candidates reduction notification signal is sent from the base station 10 to the mobile station 20. The RF circuit 10c in the base station 10 sends a number-of-candidates reduction notification signal via a PDCCH. At this point, in addition to the number-of-candidates reduction notification signal, the RF circuit 10c may also sent data via a physical downlink shared channel (PDSCH). The number-of-candidates reduction notification signal has a special format.

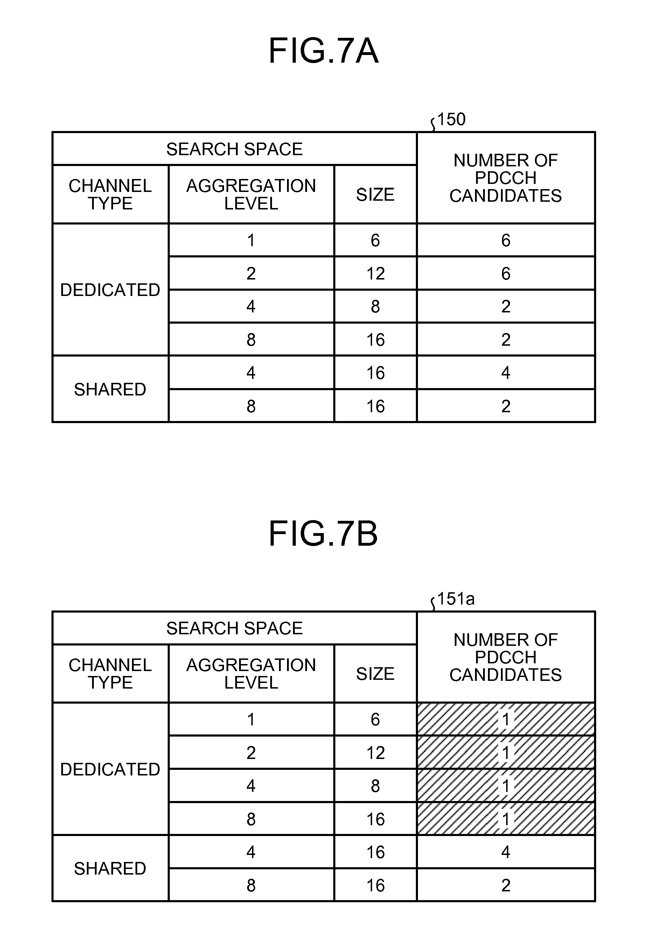

FIG. 7A is a schematic diagram illustrating an example of the initial format of the number of PDCCH candidates. FIG. 7B is a schematic diagram illustrating an example of the special format of the number of PDCCH candidates according to the first embodiment. Because the initial format is described in 3GPP TS36.213, a description thereof in detail will be omitted. As illustrated in FIG. 7A, an initial format 150 includes a search space storing area and a number of PDCCH candidates storing area. In the search space storing area, the channel type, the aggregation level, and the size are stored as information related to the search space. In the channel type, a channel (UE-specific) unique to each mobile station and a channel (Common) that is used each mobile station in a shared manner are set. In the aggregation level, the number of control channel elements (CCEs), which is the encoding rate of a PDCCH, is set as the size for each aggregation level. In the number of PDCCH candidates storing area, the number of PDCCHs targeted by BD performed by the mobile station 20 is stored as the number of PDCCH candidates.

For example, in FIG. 7A, when the aggregation level is "1", because the size (the number of CCEs) of the search space itself corresponds to the number of PDCCH candidates, "6" is set as the number of PDCCH candidates. Furthermore, when the aggregation level is "2", the size of the search space is "12"; however, because the encoding rate is 2, the number of PDCCH candidates targeted by the BD is reduced to "6". Similarly, when the aggregation levels are "4" and "8", the sizes of the search space are "8" or "16", respectively. However, because the encoding rates are 4 and 8, "2" is set thereto as the number of PDCCH candidates targeted by the BD.

For a special format 151 a, as illustrated in FIG. 7B, the configuration of data is the same as that of the initial format 150; however, "1" is set to the number of PDCCH candidates regardless of the value of the aggregation level of the PDCCH or the size (the number of CCEs) of the search space (half-tone dot meshing portion in FIG. 7B).

At Step S3, the DSP 20b in the mobile station 20 that monitored the PDCCH detects a PDCCH that is addressed to the mobile station 20 from among the monitoring target PDCCHs. Then, the DSP 20b acquires, from the detected PDCCH, the number-of-candidates reduction notification signal described above and then determines whether the type of the format included in the subject signal is the special format. When the result of the determination indicates that the type of the format is the special format (Yes at Step S3), the DSP 20b performs a number-of-candidates reduction process that reduces, based on the special format (see FIG. 7B), the number of PDCCH candidates from 16, which is the previous number of PDCCH candidates, to 4 (Step S4). In contrast, when the result of the determination indicates that the type of the format is not the special format (No at Step S3), the DSP 20b continues to detect control information by using the BD while maintaining the number of PDCCH candidates as 16 in accordance with the previous and initial format (see FIG. 7A).

An example of the method for determining, by the mobile station 20, the format type includes a method in which a symbol that is used to identify the format type is included in the number-of-candidates reduction notification signal and the mobile station 20 refers to the symbol. Alternatively, the mobile station 20 may also refer to the number of PDCCH candidates at each aggregation level and determine whether the format is the special format based on the result of comparing the number of candidates in the initial format.

At Step S5, an ACK is sent from the mobile station 20 to the base station 10 as a positive response indicating that the special format has been received normally. The base station 10 that has received the ACK as a response sends control information by using PDCCHs in a state in which the number of PDCCH candidates in the format is reduced (Step S6). Similarly, after that, the mobile station 20 monitors only the PDCCH candidates in a state in which the number of PDCCH candidates in the format is reduced by the base station 10 (Step S7). Because the mobile station 20 needs to monitor only the number of reduced PDCCH candidates in the special format, the amount of the process for acquiring control information is reduced.

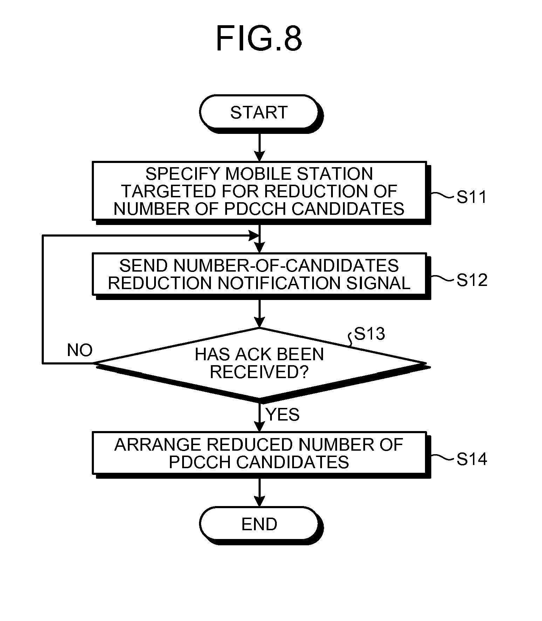

FIG. 8 is a flowchart illustrating the flow of the process performed by the base station 10 according to the first embodiment. First, at Step S11, the DSP 10a in the base station 10 specifies a mobile station targeted for the reduction of the number of PDCCH candidates. At Step S12, the RF circuit 10c in the base station 10 sends the number-of-candidates reduction notification signal described above to the mobile station 20 via a PDCCH. Then, the RF circuit 10c in the base station 10 waits for an ACK sent from the mobile station 20 (Step S13). When the DSP 10a detects that an ACK has been received (Yes at Step S13), the DSP 10a reduces the number of candidates in the format and re-arranges PDCCHs (Step S14). During the time period for which the DSP 10a does not detect the reception of an ACK (No at Step S13), the base station 10 repeatedly performs the processes at Steps S12 and S13.

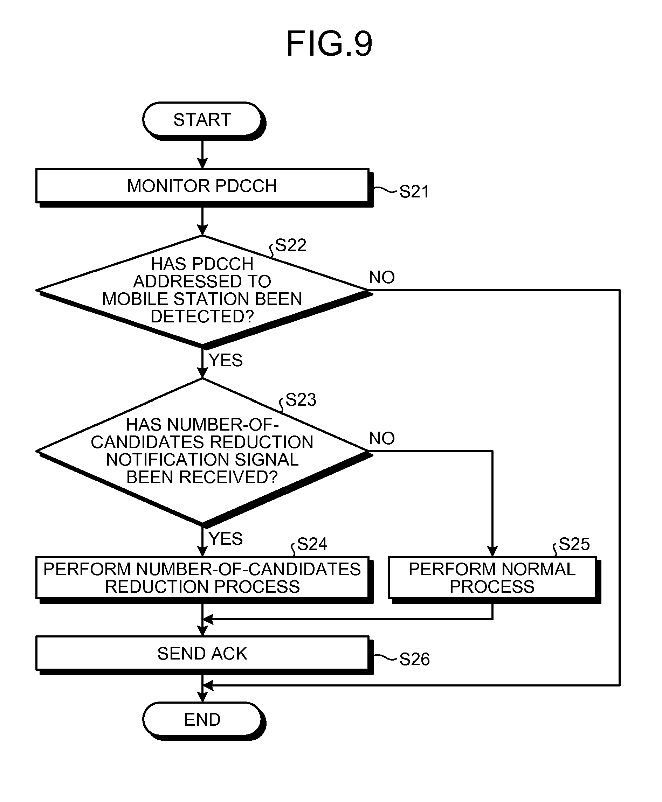

FIG. 9 is a flowchart illustrating the flow of the process performed by the mobile station 20 according to the first embodiment. At Step S21, the DSP 20b in the mobile station 20 monitors whether a PDCCH addressed to the mobile station 20 is present (monitoring). When the DSP 20b detects, from the PDCCHs targeted for the monitoring, a PDCCH addressed to the mobile station 20 (Yes at Step S22), the DSP 20b waits for the number-of-candidates reduction notification signal described above (Step S23). During the waiting period, when the DSP 20b detects that the number-of-candidates reduction notification signal has been received (Yes at Step S23), the DSP 20b performs the number-of-candidates reduction process that reduces the number of PDCCH candidates based on the special format (see FIG. 7B) included in the subject signal (Step S24). In contrast, when the DSP 20b detects that the format of the received signal is the initial format (see FIG. 7A) (No at Step S23), the DSP 20b continues, based on the initial format, the process (normal process) while maintaining the number of PDCCH candidates as the previous value (for example 16) (Step S25). Due to the end of the process performed at Step S24 or S25, the RF circuit 20c in the mobile station 20 sends an ACK to the base station 10 as a positive response indicating that the format has been received normally (Step S26). Furthermore, at Step S22, when a PDCCH addressed to the mobile station 20 is not detected from the PDCCHs targeted for the monitoring (No at Step S22), the mobile station 20 ends the series of the processes.

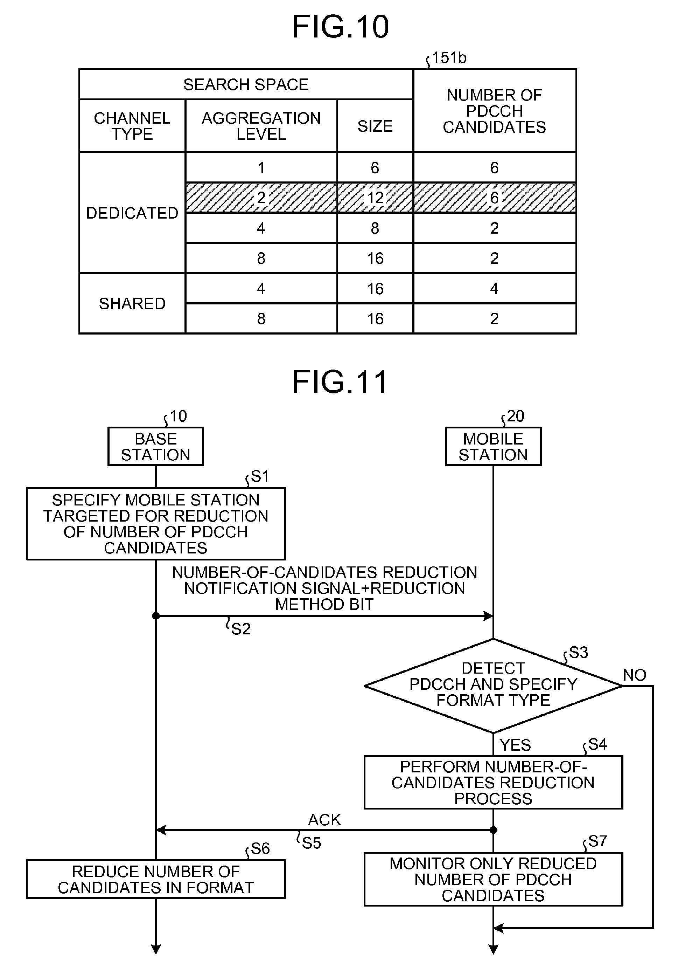

In the following, modification 1 of the first embodiment will be described with reference to FIG. 10. FIG. 10 is a schematic diagram illustrating an example of the special format 151b indicating the number of PDCCH candidates according to modification 1 of the first embodiment. As illustrated in FIG. 10, in this modification, the mobile station 20 uses only the PDCCH candidates that are associated with the aggregation level "2" as the target for the BD and excludes the PDCCHs associated with the other aggregation levels from the target for the BD (are not used). Consequently, when the mobile station 20 detects control information, the mobile station 20 only needs to search for six PDCCHs (half-tone dot meshing portion in FIG. 10) associated with the aggregation level "2". Thus, the amount of the process is decreased when compared with the case in which all of the aggregation levels are targeted for the BD. Furthermore, because the mobile station 20 can perform the BD only in a single aggregation level, when the mobile station 20 acquires control information, the mobile station 20 does not need to change the aggregation level of the PDCCH targeted for the search.

The aggregation level used by the base station 10 for the PDCCH candidate is not limited to "2" described above; therefore, any arbitrary number may also be used. However, from the viewpoint of effectively using the setting of the initial format, the aggregation level described above is preferably the same as that of the PDCCH that includes control information addressed to the mobile station 20 in the initial format. Similarly to the CCE number, if the PDCCH that includes control information is in the third CCE in the initial format, the PDCCH candidate in the special format is preferably in the third CCE at each of the aggregation levels. Consequently, the base station 10 can efficiently use (reuse) the existing setting of the initial format.

Furthermore, the number of PDCCH candidates may be decreased as a whole when compared with the initial format, the number of candidates decreased for each aggregation level or the combination thereof is not limited to the first embodiment or modification 1 thereof. Specifically, the decreased number of candidates or the combination thereof may arbitrarily be changed in accordance with various factors, such as the setting of the channel type, the setting of the aggregation level, the setting of the size (the number of CCEs), the number of pieces of control information included in a PDCCH, the number of mobile stations connected to the base station 10, or the like. In any method, because it is sufficient for the mobile station 20 to use the reduced number of PDCCH candidates as the search space, the target for the search can be decreased when compared with the initial state and thus the amount of the process due to BD performed by the mobile station 20 can be reduced by that decreased amount. Consequently, the mobile station 20 can reduce the electrical power consumption, the processing load, and the processing time.

In the following, modification 2 of the first embodiment will be described with reference to FIG. 11. FIG. 11 is a sequence diagram illustrating the operation of a wireless communication system according to modification 2 of the first embodiment. In modification 2, a reduction method indicated by each bit is defined between the base station 10 and the mobile station 20. As illustrated in FIG. 11, when the RF circuit 10c in the base station 10 sends the number-of-candidates reduction notification signal to the mobile station 20, the RF circuit 10c also sends a bit that indicates a method for reducing the number of candidates (Step S2). In contrast, the mobile station 20 refers to the reduction method that is previously defined for each bit and reduces, by using the reduction method indicated by the received bit, the number of PDCCH candidates for the monitoring target.

An arbitrary number of bits may be used. For example, if "1" is set to a bit, the DSP 20b in the mobile station 20 sets the second and the subsequent PDCCHs from the start point at each aggregation level to the reduction target. Furthermore, for example, if "2" is set to a bit, the DSP 20b in the mobile station 20 excludes the PDCCHs other than the PDCCH whose aggregation level is "4" from the PDCCH candidates. Consequently, the base station 10 appropriately changes reduction methods for reducing the number of PDCCH candidates. Thus, the mobile station 20 can suitably change the PDCCHs to be reduced in accordance with a change in the status of the base station 10, such as the variation in the number of mobile stations, a change in the provided service, a change in the setting mode, or the like. Consequently, the flexibility and the adaptability of the wireless communication system 1 is improved.

As described above, the wireless communication system 1 according to the first embodiment includes the base station 10 and the mobile station 20 that communicates with the base station 10. The base station 10 includes the sending unit 17. The sending unit 17 sends, to the mobile station 20, a signal (number-of-candidates reduction notification signal) that is used to send, as a notification, the reduction of the number of candidates for the channel (PDCCH) that includes control information addressed to the mobile station 20. The mobile station 20 includes the receiving unit 21 and the number-of-candidates reducing unit 25. The receiving unit 21 receives the signal described above that has been sent from the sending unit 17. The number-of-candidates reducing unit 25 monitors, based on the signal, one or a plurality of channels the number of which is reduced from the channel candidates and then acquires the control information from the one or the plurality of channels.

Specifically, from among a plurality of PDCCH candidates in a predetermined frequency bandwidth, the wireless communication system 1 narrows down the number of PDCCH candidates based on the aggregation level or the size (the number of CCEs). Consequently, by reducing the number of PDCCH candidates in each format, the wireless communication system 1 can reduce the number of channels targeted by the BD from, for example, 16 channels, which is used in the related technology, to 4 channels. Consequently, it is possible to reduce the amount of process in which the mobile station 20 specifies, from among the PDCCH candidates, the PDCCH that includes control information addressed to the mobile station 20. Consequently, the electrical power consumed by the mobile station 20 can be saved or a delay in a process can be reduced. Specifically, for example, in User Equipment

(UE)-Specific in transmission mode 3 that is newly added in the future, 48 types (16x3 types) of downlink control information (DCl) formats are reduced to 12 types (4x3 types). Consequently, the number of BDs performed by the mobile station 20 is reduced to 1/4 and thus the electrical power consumed by the mobile station 20 can be further saved.

Furthermore, the number of candidates may also be determined by previously narrowing down, similarly to the special format, the number of candidates for the PDCCH monitored by the mobile station 20 (monitoring) when the initial format is created. However, with this method, the probability of the conflict between mobile stations due to PDCCH allocation increases. Consequently, there may be a case in which a mobile station to which a PDCCH is not allocated by the base station 10 is present. Accordingly, in the wireless communication system 1 according to the first embodiment, at the initial allocation of the PDCCH, the base station 10 tentatively allocates the same number of candidates as that conventionally used and then sends, to the mobile station 20 as needed, the special format that is used to reduce the number of candidates. Specifically, before sending the number-of-candidates reduction notification signal, the sending unit 17 in the base station 10 sends, to the mobile station 20, a signal indicating, as a notification, that the number of PDCCH candidates indicates a value (initial value) that is obtained before the reduction. When the mobile station 20 receives the special format from the base station 10, the mobile station 20 performs the number-of-candidates reduction process based on the format and narrows down, in the subsequent process, the number of candidates.

A case in which the base station 10 sends the special format that is used to reduce the number of candidates is a case in which the probability of the above described conflict is low when compared with a case in which, for example, the number of mobile stations to which the base station 10 sends control information is smaller than a predetermined threshold (for example, 100 to 1000). Furthermore, the base station 10 may also determine the format type based on the send mode of a mobile station that is connected to the base station 10 or based on the type of the service provided by the base station 10 to each mobile station.

### [b] Second Embodiment

In the following, a second embodiment will be described. The configuration of a wireless communication system according to the second embodiment is the same as that of the wireless communication system according to the first embodiment illustrated in FIG. 1. Furthermore, the configuration of each of a base station and a mobile station in the second embodiment is the same as that of the base station 10 and the mobile station 20 according to the first embodiment illustrated in FIG. 1. Consequently, in the second embodiment, the components having the same configuration as those in the first embodiment are assigned the same reference numerals and descriptions of such components in detail are omitted. The second embodiment differs from the first embodiment in that the base station 10 periodically updates the special format. Specifically, in the first embodiment, a description has been given with the assumption that a PDCCH candidate in the special format that is used between the base station 10 and the mobile station 20 is fixed at the location (for example , aggregation level "2") that is tentatively determined. In contrast, in the second embodiment, the base station 10 refreshes the candidate location by sending the special format to the mobile station 20 at a predetermined period T.

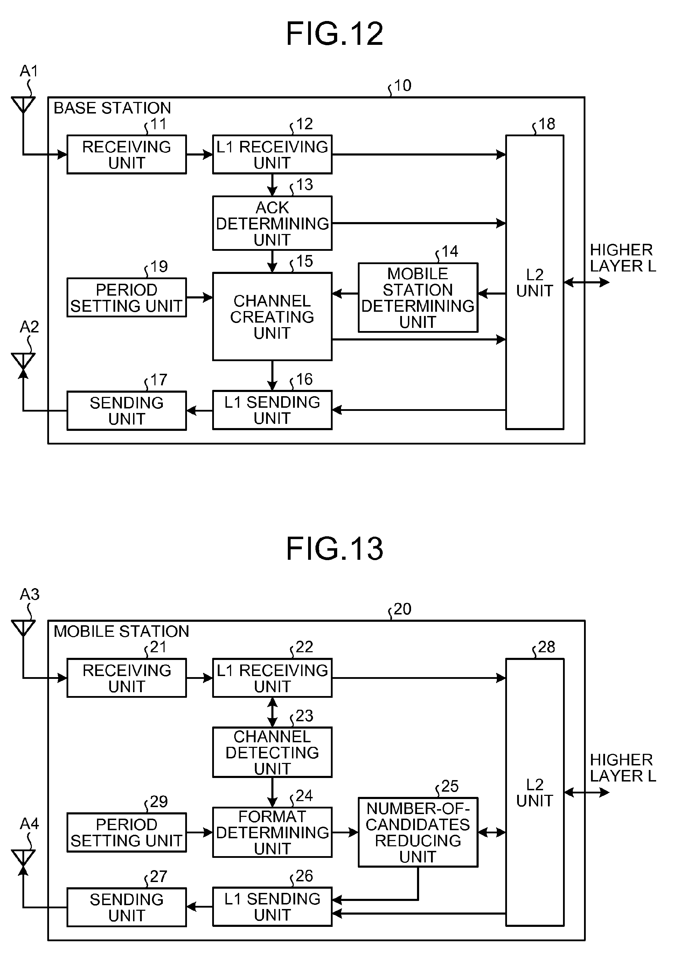

FIG. 12 is a schematic diagram illustrating the functional configuration of the base station 10 according to a second embodiment. As illustrated in FIG. 12, the configuration of the base station 10 is substantially the same as the base station 10 illustrated in FIG. 2 except that a period setting unit 19 is included. Accordingly, the components having the same configuration as those in the first embodiment are assigned the same reference numerals and descriptions of such components in detail are omitted. The period setting unit 19 sets, to the period T, the interval for sending the special format to the mobile station 20 and updating the candidate location targeted for the search and then retains the value of the period T (for example, 10 to 200 ms) such that the value can be updated. The sending unit 17 sends, to the mobile station 20 by using the PDCCH signaling, period information that indicates the period T that is set by the period setting unit 19. Alternatively, the sending unit 17 sends, to the mobile station 20, the period information that indicates the period T by using the media access control (MAC) signaling or the radio resource control (RRC) signaling.

FIG. 13 is a schematic diagram illustrating the functional configuration of the mobile station 20 according to the second embodiment. As illustrated in FIG. 13, the configuration of the mobile station 20 is substantially the same as the mobile station 20 illustrated in FIG. 3 except that a period setting unit 29 is included. Accordingly, the components having the same configuration as those in the first embodiment are assigned the same reference numerals and descriptions of such components in detail are omitted. The receiving unit 21 receives the period information sent from the sending unit 17 in the base station 10. Based on the received period information, the period setting unit 29 receives the special format from the base station 10; sets, to the period T, the interval for updating the candidate location targeted for the search; and retains the value (for example, 10 to 200 ms) of the period T such that the value can be updated. For example, when the period information is "0", the period T is set to 50 ms; when the period information is "1 ", the period T is set to 100 ms; and when the period information is "2", the period T is set to 200 ms. Consequently, by referring to the period information received by the receiving unit 21, the period setting unit 29 sets the same period as that used by the base station 10 and thus can synchronize with the base station 10.

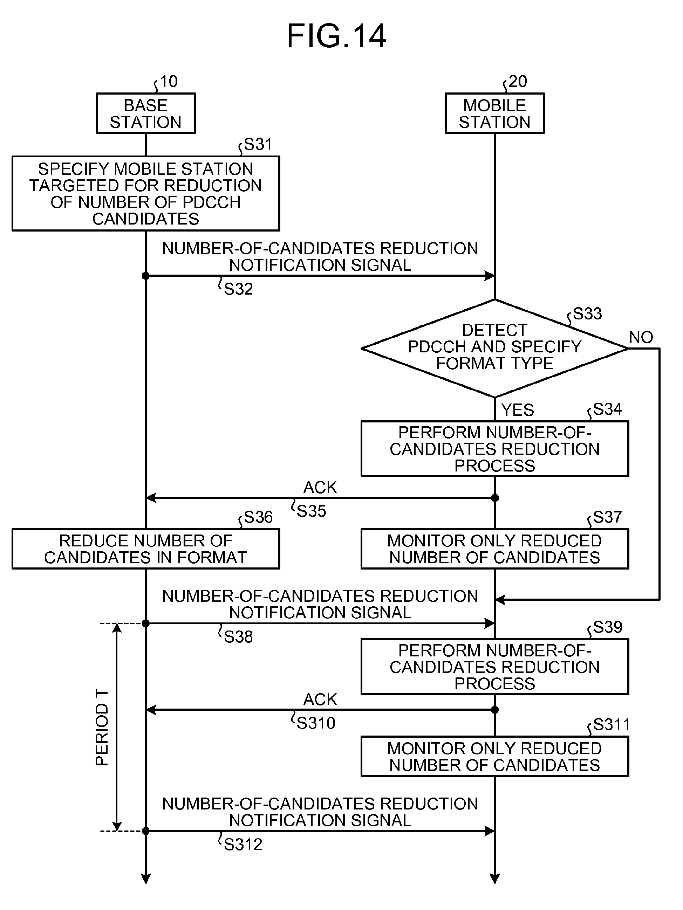

In the following, the operation of the wireless communication system 1 according to the second embodiment will be given that concentrates on the differences between the first embodiment and the fourth embodiment. FIG. 14 is a sequence diagram illustrating the operation of the wireless communication system 1 according to the second embodiment. Because FIG. 14 illustrates the same processes as those illustrated in FIG. 6 that is used in the description of the operation according to the first embodiment, processes performed at the same steps are assigned reference numerals with the same last numbers and descriptions of such processes in detail are omitted. Specifically, Steps S31 to S37 illustrated in FIG. 14 corresponds to Steps S1 to S7 illustrated in FIG. 6, respectively. Furthermore, the processes performed at Steps S38, S39, S310, S311, and S312 illustrated in FIG. 14 are the same as those performed at Steps S2, S4, S5, S7, and S2 illustrated in FIG. 6, respectively.

At Step S38, the number-of-candidates reduction notification signal that includes therein an updated special format is sent from the base station 10 to the mobile station 20 via a PDCCH. When the DSP 20b in the mobile station 20 detects that a new special format has been received, the DSP 20b performs the number-of-candidates reduction process that reduces the number of PDCCH candidates based on the received format (Step S39). Subsequently, the RF circuit 20c in the mobile station 20 sends back a reply (ACK) indicating that the updated special format has been sent to the base station 10 normally (Step S310). After that, based on the updated special format, the DSP 20b in the mobile station 20 monitors only the PDCCHs the number of which has been reduced from the PDCCH candidates (Step S311). Then, when, as a trigger, the period T has elapsed since the number-of-candidates reduction notification signal has been sent at Step S38, similarly to Step S38, the number-of-candidates reduction notification signal that includes therein a re-updated special format is sent from the base station 10 to the mobile station 20 (Step S312). The series of the processes performed at Steps S38 to S311 are repeatedly performed at intervals of the period T.

As described above, with the wireless communication system 1 according to the second embodiment, because the mobile station 20 needs to monitor only the PDCCH candidates, the number of which has been reduced, in the updated new special format, the amount of the process due to the acquiring of the control information is reduced. In particular, with the wireless communication system 1 according to the second embodiment, the base station 10 further includes the channel creating unit 15 that updates, at predetermined intervals, the candidate for a channel (PDCCH) that includes the control information addressed to the mobile station 20. Furthermore, the sending unit 17 sends, to the mobile station 20, the signal (number-of-candidates reduction notification signal) described above in which the candidate for a channel is updated by the channel creating unit 15. Specifically, the base station 10 periodically sends the number-of-candidates reduction notification signal. Consequently, the mobile station 20 performs the location determination, similarly to the initial determination, of PDCCH candidates at the predetermined intervals and determines the number of candidates that will to be monitored. Consequently, the location of the PDCCHs targeted for the monitoring is not fixed and thus the PDCCHs can be flexibly arranged.

For example, due to an update of the special format, the location of PDCCH candidates targeted for the monitoring are updated from, for example, the second PDCCHs from the start point to the third PDCCHs at each aggregation level. Furthermore, for example, the location of the PDCCH candidates targeted for the monitoring are updated from PDCCHs at the aggregation level of "2" to PDCCHs at the aggregation level of "4". In accordance with an elapsed time period, mobile stations in the cell C1 are moved and thus, due to this move, the probability of the conflict of PDCCHs between the mobile stations increases. Accordingly, as described above, the above described conflict can be avoided by the base station 10 appropriately updating the PDCCHs that are used to acquire the control information by each mobile station.

The base station 10 does not need to periodically update the special format. For example, the base station 10 may also update at an arbitrary timing. An update is triggered when, for example, the number of mobile stations is increased. Specifically, an update is performed when the number of mobile stations connected to the base station 10 reaches a predetermined threshold or when the number of mobile stations that use some candidate PDCCHs (for example, more than half of the candidate PDCCHs) or all of the candidate PDCCHs reaches a predetermined threshold.

Furthermore, in the second embodiment, because the base station 10 sends period information as a notification by using a signal used in the layer 2, it is possible to reduce the number of communication bits via the PDCCHs belonging to the layer 1. Furthermore, instead of using the period information, the base station 10 may also notify the mobile station 20 that PDCCH candidates are updated immediately before the updated special format is sent at Step S38 illustrated in FIG. 14. Consequently, the DSP 20b in the mobile station 20 recognizes that the PDCCH candidates have been updated by using a new special format and, after that, the PDCCH candidates that are previously targeted for the monitoring are changed to newly specified PDCCH candidates and then continue the monitoring.

### [c] Third Embodiment

In the following, a third embodiment will be described. The configuration of a wireless communication system according to the third embodiment is the same as that of the wireless communication system according to the first embodiment illustrated in FIG. 1. Furthermore, the configuration of a base station and a mobile station according to the third embodiment is the same as that of the base station 10 and the mobile station 20 according to the first embodiment illustrated in FIG. 1. Consequently, in the third embodiment, the components having the same configuration as those in the first embodiment are assigned the same reference numerals and descriptions of such components in detail are omitted. The third embodiment differs from the first embodiment in that the base station 10 determines the number of candidates for the mobile stations to be reduced based on the send mode of the mobile station.

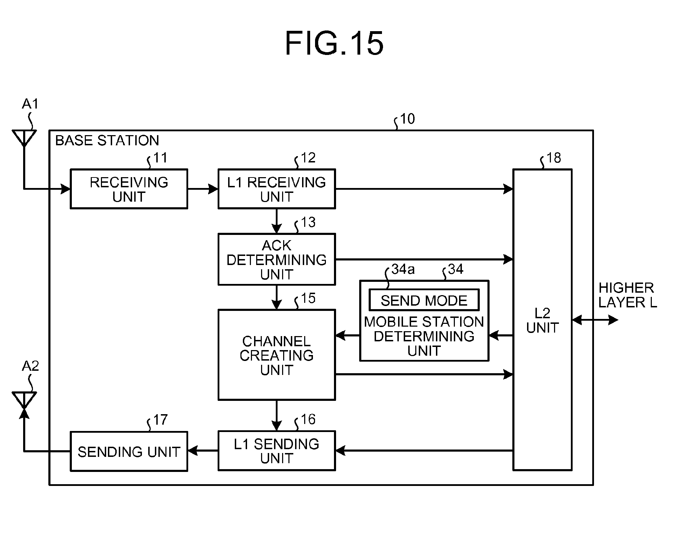

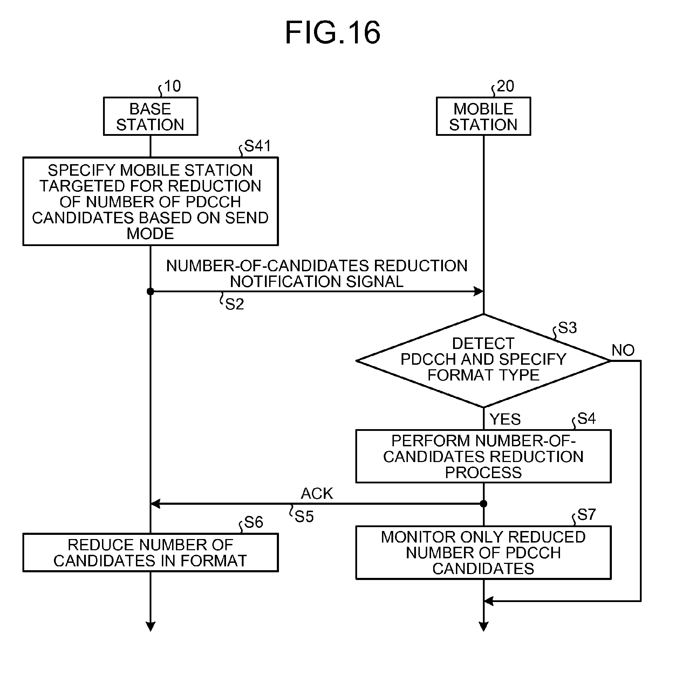

FIG. 15 is a schematic diagram illustrating the functional configuration of the base station 10 according to a third embodiment. As illustrated in FIG. 15, the configuration of the base station 10 is the same as that of the base station 10 illustrated in FIG. 2 except for a mobile station determining unit 34. Accordingly, the components having the same configuration as those in the first embodiment are assigned the same reference numerals and descriptions of such components in detail are omitted. FIG. 16 is a sequence diagram illustrating the operation of the wireless communication system 1 according to the third embodiment. Because FIG. 16 illustrates the same processes as those illustrated in FIG. 6 that is used in the description of the operation according to the first embodiment, processes performed at the same steps are assigned reference numerals with the same last numbers and descriptions of such processes in detail are omitted.

In the following, the operation of the wireless communication system 1 according to the third embodiment will be given that concentrates on the differences between the first embodiment and the fourth embodiment. The mobile station determining unit 34 in the base station 10 performs, due to the DSP 10a, the process at Step S41. Specifically, the mobile station determining unit 34 retains a send mode 34a of each mobile station, on which the base station 10 performs the PDCCH transmission, such that the send mode 34a can be updated and then determines, for each mobile station by referring to the send mode 34a, whether the number of PDCCH candidates can be reduced. For example, for the mobile station targeted for the determination, the mobile station determining unit 34 determines whether the number of the DCI formats is equal to or greater than a predetermined threshold. If the number of the DCl formats is equal to or greater than a predetermined threshold, the mobile station determining unit 34 selects mobile stations targeted for the determination as the mobile stations on which the number-of-candidates reduction process is performed. If the number of the DCl formats is less than the predetermined threshold, the mobile station determining unit 34 excludes the subject mobile stations from the target by the number-of-candidates reduction process. Then, the RF circuit 10c in the base station 10 sends the number-of-candidates reduction notification signal to the selected mobile station via a PDCCH.

As described above, with the wireless communication system 1 according to the third embodiment, because the base station 10 determines, based on the send mode of the mobile stations, mobile stations targeted for the number of candidates to be reduced, only the mobile stations that receives a lot of the DCl formats are selected as the number of PDCCH candidates to be reduced. As the number of DCl formats increases in a PDCCH, the number of candidates to be monitored by a mobile station increases. Consequently, the base station 10 narrows down the mobile stations targeted by the number-of-candidates reduction process to the area in which a large number of mobile stations as the candidates is present, whereby the number of candidates for the mobile stations to be reduced is increased. Consequently, the number of candidates targeted by the BD can be efficiently reduced. Accordingly, the base station 10 can more efficiently reduce the amount of the process performed by the mobile station. Consequently, it is possible to efficiently reduce the electrical power consumed by each of the mobile stations in the cell C1, the processing load, and the processing time.

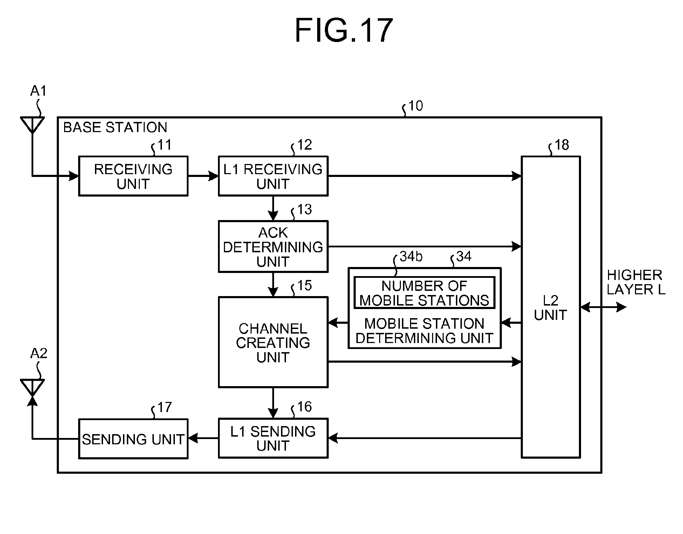

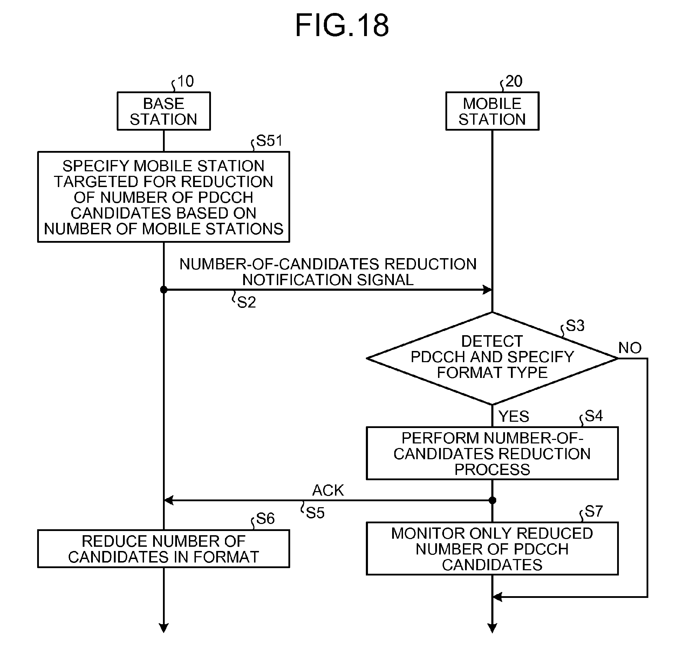

In the following, modification 1 of the third embodiment will be described with reference to FIGS. 17 and 18 as a modification of the third embodiment. FIG. 17 is a schematic diagram illustrating the functional configuration of the base station 10 according to modification 1 of the third embodiment. FIG. 18 is a sequence diagram illustrating the operation of the wireless communication system 1 according to modification 1 of the third embodiment. In modification 1, the base station 10 retains the number of mobile stations 34b to which the base station 10 sends control information such that the number of mobile stations 34b can be updated and then determines, by referring to the number of mobile stations 34b, whether the base station 10 can reduce the number of PDCCH candidates. For example, by using the DSP 10a, the mobile station determining unit 34 counts the number of mobile stations at the sending destination of the control information and determines whether the number of mobile stations is equal to or greater than a predetermined threshold (for example, 100 to 1000). If the number of mobile stations is less than a predetermined threshold, the mobile station determining unit 34 determines to perform the number-of-candidates reduction process and the RF circuit 10c sends the number-of-candidates reduction notification signal to the mobile station 20 via the PDCCH. In contrast, if the number of mobile stations is equal to or greater than the predetermined threshold, the base station 10 excludes the mobile station 20 from the target for the number-of-candidates reduction process without sending the number-of-candidates reduction notification signal to the mobile station 20.

As described above, with the wireless communication system 1 according to the third embodiment, because the base station 10 determines, based on the number of mobile stations, mobile stations for the number of candidates to be reduced, the number-of-candidates reduction process is performed only when the number of mobile stations the performs the PDCCH transmission is small. As the number of mobile stations that performs the PDCCH transmission increases, the probability of conflict occurring in a PDCCH that is used between mobile stations becomes high. Consequently, by reducing a case in which the base station 10 performs the number-of-candidates reduction process to a case in which the number of mobile stations is small, the number of times the same PDCCH is used to acquire the control information by a plurality of different mobile stations (frequency of conflicts) is reduced. Consequently, it is possible to prevent a case in which a mobile station erroneously acquires, via a PDCCH, the control information that has been sent to another mobile station. Thus, each of the mobile station reliably acquires accurate control information that is sent to the mobile station itself. Consequently, efficient data transmission can be implemented and the reliability of the wireless communication system 1 can be improved.

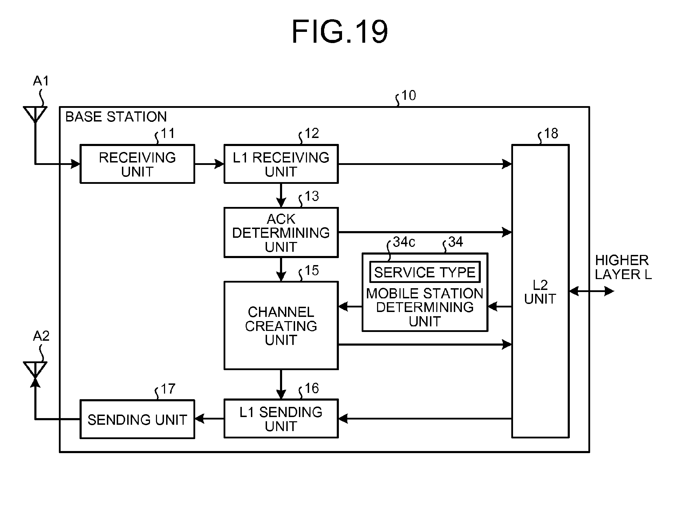

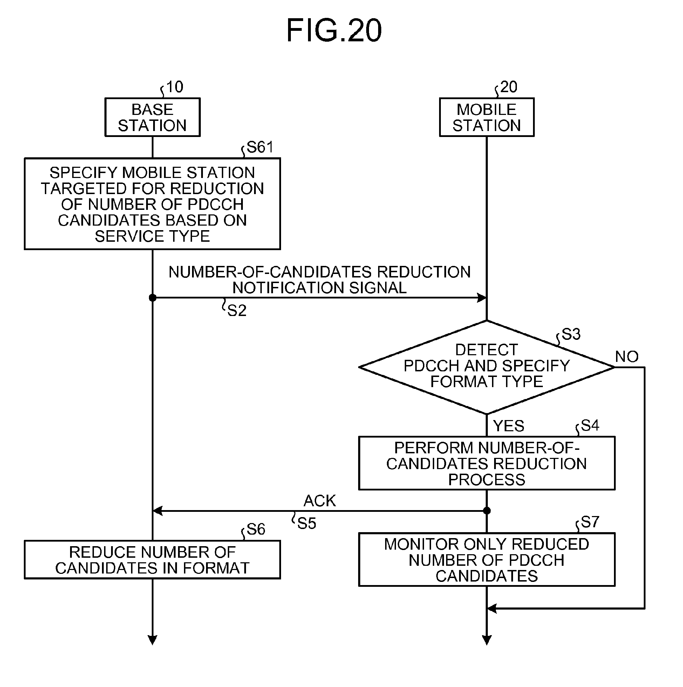

In the following, modification 2 of the third embodiment will be described with reference to FIGS. 19 and 20 as another modification of the third embodiment. FIG. 19 is a schematic diagram illustrating the functional configuration of the base station 10 according to modification 2 of the third embodiment. FIG. 20 is a sequence diagram illustrating the operation of the wireless communication system 1 according to modification 2 of the third embodiment. In modification 2, the base station 10 retains a service type 34c requested by the mobile station 20 to the base station 10 such that the service type 34c can be updated and determines, for each mobile station by referring to the service type 34c, whether PDCCHs can be reduced. For the mobile station that performs the PDCCH transmission, the mobile station determining unit 34 determines the service type requested from the mobile station and then selects, in accordance with the determined service type, the mobile station on which the number-of-candidates reduction process is performed. For example, like a packet transmission service, in a service that can allow a delay, the base station 10 selects a mobile station that is targeted for the determination as the mobile station that is to be subjected to the number-of-candidates reduction process. Then, the RF circuit 10c in the base station 10 sends, via the PDCCH, the number-of-candidates reduction notification signal to the selected mobile station. In contrast, like a short message service, in a service in which average retaining time is short, the base station 10 excludes the subject mobile station from the target for the number-of-candidates reduction process.

As described above, with the wireless communication system 1 according to the third embodiment, the base station 10 determines, based on the service type requested from a mobile station, candidate mobile stations to be reduced. Consequently, only the mobile stations that effectively reduce the number of candidates for PDCCHs is selected as candidate mobile stations to be reduced for the DCCHs. The amount of transmitted data increases as the average retaining time is longer; therefore, the effectiveness due to the reduction of the number of PDCCH candidates is improved. Consequently, because the base station 10 narrows down the target mobile stations that are subjected to the number-of-candidates reduction process to mobile stations in which the average retaining time is equal to or greater than a threshold, it is possible to more effectively implement the number-of-candidates reduction process that efficiently reduces the number of candidates. Consequently, the base station 10 can more effectively reduce the amount of the process performed by the mobile station. Thus, it is possible to efficiently reduce the electrical power consumed by each of the mobile stations located in the cell C1, the processing load, and the processing time.

In any modifications in the third embodiment, the base station 10 further includes the mobile station determining unit 34 that determines candidate mobile stations to be reduced for a channel (PDCCH). However, the mobile station determining unit 34 (the DSP 10a used as hardware) does not need to separately use the three types of parameters (the send mode, the number of mobile stations, and the service type). For example, two or more parameters from among these parameters may also be used in combination. At this point, the mobile station determining unit 34 may also perform weighting by, for example, multiplying the same or a different coefficient by each parameter.

In each of the embodiments and the modifications described above, the components of each unit in the base station 10 and the mobile station 20 are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. For example, the ACK determining unit 13 and the channel creating unit 15 in the base station 10, or the channel detecting unit 23 and the format determining unit 24 in the mobile station 20 may also be integrated as a single unit. In contrast, the channel detecting unit 23 may also be separated by dividing it into a unit that detects a PDCCH when a number-of-candidates reduction notification signal is received (detecting function) and into a unit that monitors only the reduced number of PDCCH candidates after the number-of-candidates reduction process has been performed (monitoring function). Furthermore, the memories 10d and 20d may also be connected via a network or a cable as external devices of the base station 10 and the mobile station 20.

Furthermore, in the above explanation, a description has been individually given of the configuration and the operation for each embodiment; however, the wireless communication system 1 according to each of the embodiments may integrally include the units specified in the other embodiments or modifications. Furthermore, the combination of the embodiments is not limited to two. For example, any combination, such as three or more combinations, may also be used. For example, the base station 10 according to the second and third embodiments may also perform the number-of-candidates reduction process by using the special format used in modification 1. Furthermore, in contrast, the base station 10 according to the first embodiment may also have a function of specifying, based on any one of the parameters (the send mode, the number of mobile stations, or the service type) described in the third embodiment, a mobile station related to channel candidates that are targeted for the reduction. Furthermore, a single wireless communication system may also have all of the components described in the first to the third embodiments and modifications 1 and 2.

In each of the embodiments described above, a description has been given with the assumption that the mobile station is a mobile phone, a smart phone, a personal digital assistant (PDA); however, the present invention is not limited the mobile station. For example, various communication devices that receive data from a base station by using the control information may also be used.

### [Explanation of Reference]

- 1: wireless communication system
- 10: base station
- 10a: DSP
- 10b: FPGA
- 10c: RF circuit
- 10d: memory
- 10e: IF
- 11: receiving unit
- 12: L1 receiving unit
- 13: ACK determining unit
- 14: mobile station determining unit
- 15: channel creating unit
- 16: L1 sending unit
- 17: sending unit
- 18: L2 unit
- 19: period setting unit
- 20: mobile station
- 20a: CPU
- 20b: DSP
- 20c: RF circuit
- 20d: memory
- 20e: display device
- 21: receiving unit
- 22: L1 receiving unit
- 23: channel detecting unit
- 24: format determining unit
- 25: number-of-candidates reducing unit
- 26: L1 sending unit
- 27: sending unit
- 28: L2 unit
- 29: period setting unit
- 34: mobile station determining unit
- 34a: send mode
- 34b: the number of mobile stations
- 34c: service type
- 150: initial format
- 151a, 151b: special format
- A1, A2, A3, A4: antenna
- C1: cell
- L: higher layer

## Claims

1. A wireless communication system comprising:
a base station; and
a mobile station that communicates with the base station, wherein
the base station includes
a sending unit that sends, to the mobile station, a first signal that indicates, as a notification, reduction of the number of candidates for channels each of which includes control information addressed to the mobile station, and
the mobile station includes
a receiving unit that receives the first signal sent by the sending unit, and
an acquiring unit that monitors one or a plurality of channels the number of which has been reduced, from the candidates, based on the first signal and that acquires the control information from the one or the plurality of channels.

2. The wireless communication system according to claim 1, wherein, before the sending unit in the base station sends the first signal, the sending unit sends, to the mobile station, a second signal that indicates, as a notification, that the number of candidates for the channels is a value obtained before the reduction.

3. The wireless communication system according to claim 1, wherein
the base station further includes an updating unit that updates, at predetermined intervals, the candidates for the channels each of which includes the control information addressed to the mobile station, and
the sending unit sends, to the mobile station, the first signal in which the candidates for the channels has been updated by the updating unit.

4. The wireless communication system according to claim 1, wherein the base station further includes a specifying unit that specifies a mobile station targeted for the reduction of the number of candidates for the channels.

5. A base station comprising:
a specifying unit that specifies a mobile station targeted for reduction of the number of candidates for channels; and
a sending unit that sends, to the mobile station, a first signal that indicates, as a notification, reduction of the number of candidates for channels each of which includes control information addressed to the mobile station specified by the specifying unit.

6. A mobile station comprising:
a receiving unit that receives a first signal that indicates, as a notification, reduction of the number of candidates for channels each of which includes control information that is sent from a base station and that is addressed to the mobile station; and
an acquiring unit that monitors one or a plurality of channels the number of which has been reduced, from the candidates, based on the first signal and that acquires the control information from the one or the plurality of channels.

7. A wireless communication method in a wireless communication system that includes a base station and a mobile station that communicates with the base station, the wireless communication method comprising:
sending, to the mobile station, a first signal that indicates, as a notification, reduction of the number of candidates for channels each of which includes control information addressed to the mobile station, by the base station;
receiving the first signal that is sent at the sending, by the mobile station; and
monitoring one or a plurality of channels the number of which has been reduced, from the candidates, based on the first signal and acquiring the control information from the one or the plurality of channels, by the mobile station.
